# EUROPÄISCHE PATENTSCHRIFT

(11) **EP 2 735 353 B1**
(45) Veröffentlichungstag und Bekanntmachung des Hinweises auf die Patenterteilung: **24.08.2016**
(21) Anmeldenummer: 13188619.4
(22) Anmeldetag: 15.10.2013
(51) Int. Cl.: B01D 46/24, B01D 29/19

(54) **Filterelement mit Stützrohr**
Filter element with support tube
Élément de filtration avec tube de support

(30) Priorität: 23.11.2012 DE 102012022848
(43) Veröffentlichungstag der Anmeldung: 28.05.2014
(73) Patentinhaber: MANN + HUMMEL GMBH, 71638 Ludwigsburg (DE)
(72) Erfinder: Schulz, Franziska, 67105 Schifferstadt (DE); Burkhart, Bernd, 76829 Landau (DE)

(56) Entgegenhaltungen:
- EP-A2- 1 163 873
- DE-A1- 10 063 881
- DE-A1-102010 010 964
- US-A1- 2003 213 059

## Beschreibung

### Technisches Gebiet

Die Erfindung betrifft ein Filterelement nach dem Oberbegriff des Anspruchs 1.

### Stand der Technik

Aus der EP 1 163 873 A2 ist ein Staubsauger mit einem Filterelement mit einem an einem Deckel befestigten Stützkörper bekannt.
Aus der DE 100 63 881 A1 ist ein Filterelement mit einem Stützkörper bekannt, auf welchem ein Filtermedium mittels Schweißnähten fixiert ist.
Aus der US 2003/0213059 A1 ist ein wechselbarer Filter mit einem porösen Kern mit einer Serie von Löchern und/oder Schlitzen bekannt.
Aus der DE 10 2010 010 964 A1 ist ein Stützgitter für ein Filterelement bekannt. Dieses weist einseitig ein Gewinde zur Montage an einem Filtergehäuse auf und überträgt beim Ein- und Ausschrauben Torsionskräfte vom einen Ende, an welchem der Bediener dreht, zum anderen Ende, welches das Gewinde aufweist.

Aufgrund der teilweise hohen Belastungen, welche bei Montage und Demontage auftreten können, müssen die Stege des Stützgitters einen ausreichend großen kraftübertragenden Querschnitt aufweisen, wodurch der durchströmbare Querschnitt der Durchströmungsöffnungen zwischen den Stegen reduziert und der Druckverlust des Filterelements erhöht wird.

Der Erfindung liegt die Aufgabe zugrunde, ein Stützrohr bereitzustellen, welches beständig gegen Torsions- und Biegebeanspruchungen ist und einen geringen Druckverlust ermöglicht.

### Offenbarung der Erfindung

Diese Aufgabe wird gelöst durch ein Filterelement mit einem Stützrohr, bei welchem die Stege so miteinander verbunden sind, dass die zwischen den Stegen gebildeten Durchtrittsöffnungen in einem dem ersten axialen Ende des Stützgitters benachbarten Bereich größer sind als in einem dem zweiten axialen Ende des Stützgitters benachbarten Bereich.

Dadurch kann ein bei der Verwendung des Produkts höher beanspruchter Bereich in Bezug auf die Festigkeit optimiert werden, ohne dass der Druckverlust oder der Materialeinsatz überproportional ansteigen muss.

Die genannten Bereiche können direkt aneinander angrenzen oder durch weitere Bereiche miteinander verbunden sein, die beispielsweise Durchtrittsöffnungen mit einem insbesondere mittleren Querschnitt aufweisen, der kleiner ist als die Durchtrittsöffnungen im dem ersten axialen Ende des Stützgitters benachbarten Bereich und größer als die Durchtrittsöffnungen in einem dem zweiten axialen Ende des Stützgitters benachbarten Bereich. So kann ein progressiver Verlauf der Größe der Durchtrittsöffnungen erreicht werden, der ein Optimum an Festigkeit und verfügbarer Strömungsfläche bietet.

Das Stützgitter wird erfindungsgemäß verwendet in einem von einem Filterelement umschlossenen Innenraum, wobei das Stützgitter das Filtermedium bei einer Durchströmung beispielsweise von außen nach innen abstützen kann.

Erfindungsgemäß verläuft ein Teil der Stege schräg, beispielsweise jeweils entlang einer oder mehrerer Referenzebenen, wobei die Ebenen nicht parallel und nicht senkrecht zur Mittelachse angeordnet sind. Die Stege sind damit nicht spiralförmig, es wird jedoch durch Aneinanderreihen einer Mehrzahl solcher Stege eine kontinuierlich oder diskontinuierlich schraubenförmig ansteigende Struktur gebildet, welche Torsionsbeanspruchungen aufnehmen kann. Bevorzugt werden mehrere schraubenförmig ansteigende Strukturen aus einer Mehrzahl von eben verlaufenden Stegen verwendet, die weiter bevorzugt teilweise so gegeneinander geneigt sind, dass sie sich in einem insbesondere spitzen Winkel schneiden. Auf diese Weise können in Kombination mit parallel zur Mittelachse verlaufenden Stegen dreieckförmige Strukturen und Durchtrittsöffnungen dargestellt werden. Weiter bevorzugt werden mehrere sich bevorzugt mehrfach schneidende, gegenläufige schraubenförmig ansteigende Strukturen verwendet. Auf diese Weise können Torsionsbeanspruchungen in beide Richtungen gut aufgenommen werden.

Das Stützgitter umfasst eine Mehrzahl von Stegen, die teilweise untereinander verbunden sind und eine im Wesentlichen hohlzylindrische, einen zylindrischen Innenraum umgebende Gitterstruktur bilden. Dabei werden jeweils durch mindestens drei miteinander verbundene Stege Durchtrittsöffnungen gebildet, durch welche Fluid radial in Bezug auf eine Mittelachse der hohlzylindrischen Gitterstruktur strömen kann. Erfindungsgemäß ist dabei der mittlere Öffnungsquerschnitt der Durchtrittsöffnungen in einem dem ersten axialen Ende des Stützgitters benachbarten Bereich größer als in einem dem zweiten axialen Ende des Stützgitters benachbarten Bereich. Besonders bevorzugt ist der Öffnungsquerschnitt aller Durchtrittsöffnungen in einem dem ersten axialen Ende des Stützgitters benachbarten Bereich größer als in einem dem zweiten axialen Ende des Stützgitters benachbarten Bereich.

Das Stützgitter ist bevorzugt aus einem insbesondere thermoplastischen Kunststoff, beispielsweise mit Faserverstärkung gebildet und weiter bevorzugt im Spritzgießverfahren hergestellt.

Die Stege weisen bevorzugt einen abgeflachten Querschnitt mit zwei im Wesentlichen parallelen Oberflächen auf.

In einer bevorzugten Ausführungsform weist das Stützrohr am zweiten axialen Ende Befestigungsmittel auf, beispielsweise ein Gewinde, zur insbesondere formschlüssigen Befestigung in einem Filtergehäuse. Auf diese Weise ist der bei Montage und Demontage am höchsten beanspruchte Bereich an der Befestigungsstelle durch die dort kleiner ausgeführten Durchtrittsöffnungen verstärkt. Weiter bevorzugt umfasst das Stützrohr am ersten axialen Ende einen Griffbereich auf, an welchem der Bediener angreifen kann und die zur Montage oder Demontage erforderlichen Biege- oder Torsionskräfte aufbringen kann. Diese Ausführungen haben den Vorteil, dass in dem ersten Bereich, der sich vom Griffbereich erstreckt, größere Durchtrittsöffnungen vorgesehen werden können als im zweiten Bereich, der sich vom Befestigungsmittel in Richtung des ersten Bereichs erstreckt. So kann der nahe an den Befestigungsmitteln angeordnete Bereich, der bei Montage und Demontage besonders hohen Belastungen ausgesetzt ist, im Vergleich zum ersten Bereich verstärkt ausgebildet werden.

Das Stützgitter ist als hohlzylindrisches Stützgitter ausgebildet, weiches einen zylindrischen Innenraum umschließt. Es kann ferner auch einen ovalen oder elliptischen Querschnitt aufweisen und/oder konisch ausgebildet sein, so dass der Querschnitt an einem Ende, bevorzugt am zweiten axialen Ende, beispielsweise im Bereich des Befestigungsmittels, größer ist als am anderen Ende.

In einer bevorzugten Ausführungsform ist zumindest ein Teil der Stege derart miteinander verbunden, dass sie Dreiecke bilden oder dreieckige Durchtrittsöffnungen umschließen. Auf diese Weise wird eine hinsichtlich Steifigkeit und Druckverlust optimale Lösung bereitgestellt.

In einer Ausführungsform ist zumindest ein Teil der Stege derart miteinander verbunden, dass sie Rautenformen oder rautenförmige Durchtrittsöffnungen mit mindestens einer nichtrechtwinkligen Ecke bilden.

In einer bevorzugten Ausführungsform verläuft ein Teil der Stege im Wesentlichen parallel zur Mittelachse entlang einer Mehrzahl von angrenzenden Durchtrittsöffnungen. Diese erlauben eine gute Aufnahme von Biegebeanspruchungen am Stützgitter.

In einer Ausführungsform sind mindestens zwei Stege in nicht parallele Referenzebenen vorgesehen, die sich im Bereich des Stützrohrs miteinander und mit parallel zur Mittelachse verlaufenden Stegen so schneiden, dass die aufeinander treffenden Stege ein Dreieck einschließen.

In einer Ausführungsform sind in dem zweiten axialen Ende des Stützgitters benachbarten Bereich dreieckige Durchtrittsöffnungen durch einen oder mehrere innerhalb der dreieckigen Durchtrittsöffnungen angeordnete Zusatzstege verstärkt. Auf diese Weise kann ein Optimum von Festigkeit, Materialeinsatz und Druckverlust erreicht werden.

In einer Ausführungsform verlaufen die Zusatzstege im Wesentlichen parallel zur Mittelachse oder in einer Ebene senkrecht zur Mittelachse. So können die im Wesentlichen dreieckigen Strukturen optimal verstärkt werden.

In einer Ausführungsform werden die Teilstege jeweils entweder im Wesentlichen parallel zur Mittelachse oder ringförmig umlaufend in einer Ebene senkrecht zur Mittelachse angeordnet, so dass im Wesentlichen rechteckige Durchtrittsöffnungen gebildet werden.

Die Erfindung betrifft ferner ein Filterelement, umfassend ein Stützgitter nach einem der vorhergenenden Ansprüche und ein das Stützgitter ringförmig umschließendes Filtermedium, welches beispielsweise als sternförmig gefalteter Filterbalg oder als das Stützrohr flächig umschließendes Filtermedium ausgeführt ist.

In einer Ausführungsform ist das Filterelement als Hauptfilterelement mit einem sternförmig gefalteten Filterbalg ausgeführt, wobei das Stützrohr und der Filterbalg bevorzugt mittels ein oder zwei Endscheiben aus gießbarem Polyurethan derart dichtend verbunden ist, dass Stützrohr und Filterbalg in die Endscheiben eingebettet ist.

In einer Ausführungsform ist das Filterelement als Sekundärelement ausgebildet, umfassend ein das Stützrohr flächig umschließendes Filtermedium, beispielsweise ein Vlies. Das Vlies kann beispielsweise durch Schweißen, Kleben oder mittels Spannringen mit dem Stützrohr dichtend verbunden sein.

Im Folgenden wird die Erfindung anhand der Beschreibung von Ausführungsformen und anhand von Zeichnungen weiter erläutert, wobei die dort beschriebenen oder gezeigten Merkmale in Kombination mit vorgenannten Merkmalen oder alleinstehend Gegenstand der Erfindung sind und diese gegenständlich fortbilden können.

### Kurze Beschreibung der Zeichnungen

Ausführungsformen der Erfindung werden im Folgenden anhand der Figuren näher erläutert. Es zeigen:
- Fig. 1: einen Teilschnitt eines Stützrohrs, wobei zwei mögliche Formen eines Filterelements umfassend ein solches Stützrohr gezeigt werden; und
- Fig. 2: eine perspektivische Ansicht eines Stützrohrs.

### Ausführungsform(en) der Erfindung

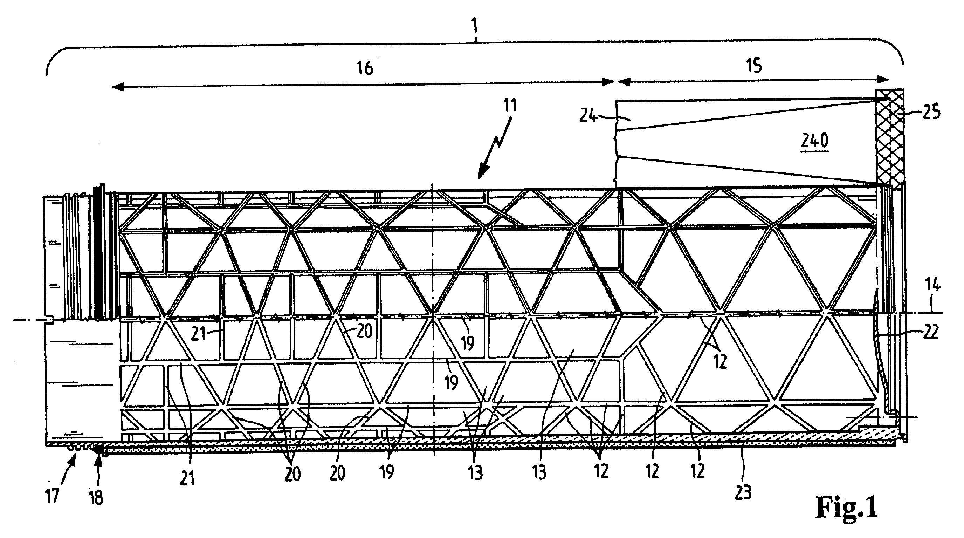

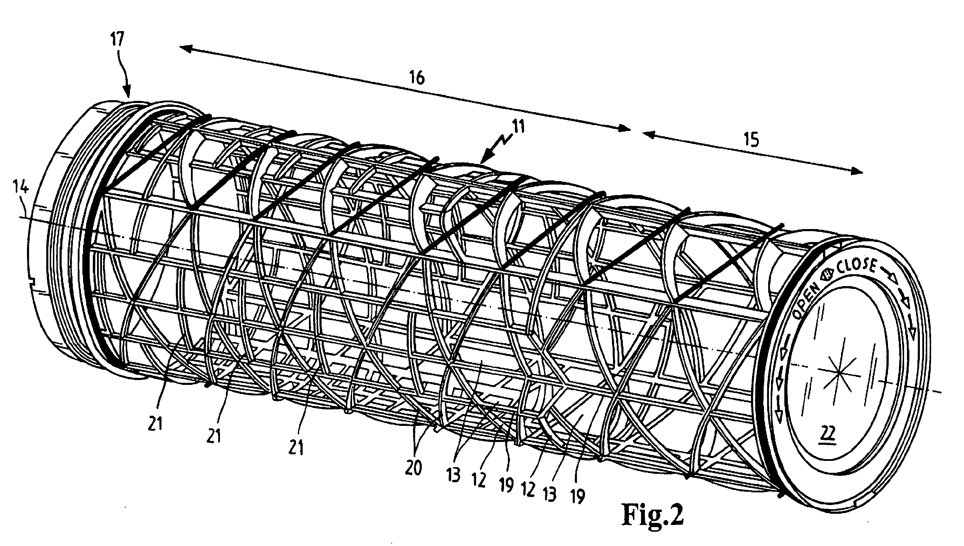

Fig. 1 und Fig. 2 zeigen eine Ausführungsform eines Stützgitters 11. Das Stützgitter ist hohlzylindrisch als Stützrohr ausgebildet und weist am ersten axialen Ende bevorzugt eine geschlossene Endscheibe 22 auf. Am zweiten axialen Ende ist ein Gewinde 17 zur Befestigung an einem Filtergehäuse vorgesehen, sowie eine Ringdichtung 18 zur radialen Abdichtung gegenüber dem Filtergehäuse, so dass die bevorzugt radial außerhalb des Stützrohrs befindliche Rohseite von der bevorzugt im Innenraum des Stützgitters 11 gebildete Reinseite getrennt wird. Das Stützgitter 11 ist aus Stegen 12 gebildet, die so miteinander verbunden sind, dass sie vorzugsweise dreieckige Durchtrittsöffnungen 13 bilden. In dem ersten Bereich 15, der dem ersten axialen Ende mit der geschlossenen Endscheibe 22 benachbart ist, bilden Stege 12 Durchtrittsöffnungen 13 mit großem Querschnitt, wohingegen im zweiten Bereich 16, der dem zweiten axialen Ende mit Gewinde 17 benachbart ist oder an diesen angrenzt, Zusatzstege 21 vorgesehen sind, die für eine zusätzliche Verstärkung im Bereich des Gewindes 17 sorgen, woraus in diesem Bereich 16 kleinere Durchtrittsöffnungen resultieren.

Durch die Durchtrittsöffnungen 13 kann Fluid, bevorzugt Luft radial in Bezug auf eine Mittelachse der hohlzylindrischen Gitterstruktur strömen. Besonders bevorzugt ist wie im gezeigten Ausführungsbeispiel der Öffnungsquerschnitt aller Durchtrittsöffnungen 13 in einem dem ersten axialen Ende des Stützgitters benachbarten Bereich 15 größer als in einem dem zweiten axialen Ende des Stützgitters benachbarten Bereich 16.

Das Stützgitter 11 ist bevorzugt aus einem insbesondere thermoplastischen Kunststoff, beispielsweise mit Faserverstärkung gebildet und weiter bevorzugt im Spritzgießverfahren hergestellt.

Wie aus Fig. 2 ersichtlich weisen die Stege bevorzugt einen abgeflachten Querschnitt mit zwei im Wesentlichen parallelen Oberflächen auf. Die parallelen Oberflächen sind dabei bevorzugt im Wesentlichen parallel zur Durchströmungsrichtung, wodurch bei optimierter Festigkeit der Druckverlust minimiert wird.

Das erste axiale Ende des Stützgitters 11 bildet am ersten axialen Ende einen Griffbereich, an welchem der Bediener angreifen kann und die zur Montage oder Demontage erforderlichen Biege- oder Torsionskräfte aufbringen kann.

Das Stützgitter 11 ist als hohlzylindrisches Gitter ausgebildet, welches einen zylindrischen Innenraum umschließt. Die Stege 12 sind derart miteinander verbunden, dass sie Dreiecke bilden oder dreieckige Durchtrittsöffnungen 13 umschließen.

Im Bereich 16 ist ein Teil der Stege 12 mit nur in diesem Bereich vorgesehenen Zusatzstegen 21 derart miteinander verbunden, dass sie innerhalb von Dreiecksformen kleinere rautenförmige Durchtrittsöffnungen, bevorzugt mit mindestens einer nichtrechtwinkligen Ecke bilden. Dabei verlaufen die Zusatzstege 21 im Wesentlichen parallel zur Mittelachse oder in einer Ebene senkrecht zur Mittelachse 14. So können die im Wesentlichen dreieckigen Strukturen optimal verstärkt werden

Ein Teil der Stege 12 und ein Teil der Zusatzstege 21 verlaufen im Wesentlichen parallel zur Mittelachse 14 entlang einer Mehrzahl von angrenzenden Durchtrittsöffnungen 13. Diese erlauben eine gute Aufnahme von Biegebeanspruchungen am Stützgitter.

Ein Teil der Stege 12 verläuft schräg, beispielsweise jeweils entlang einer oder mehrerer Referenzebenen, wobei die Ebenen nicht parallel und nicht senkrecht zur Mittelachse 14 angeordnet sind. Die Stege 12 sind damit nicht vollständig spiralförmig oder schraubenförmig, es wird jedoch durch Aneinanderreihen einer Mehrzahl solcher Stege eine im Wesentlichen schraubenförmig ansteigende Struktur gebildet, welche Torsionsbeanspruchungen aufnehmen kann. Das Stützgitter 11 ist aus einer Mehrzahl solcher schraubenförmig ansteigenden Strukturen aus eben verlaufenden Stegen gebildet, die so gegeneinander geneigt sind, dass sie sich in einem insbesondere spitzen Winkel schneiden. Auf diese Weise können in Kombination mit parallel zur Mittelachse verlaufenden Stegen 19 dreieckförmige Strukturen und Durchtrittsöffnungen dargestellt werden. Es werden mehrere sich bevorzugt mehrfach schneidende, gegenläufige schraubenförmig ansteigende Strukturen verwendet. Auf diese Weise können Torsionsbeanspruchungen in beide Richtungen gut aufgenommen werden.

Die Erfindung betrifft ferner ein in Fig. 1 angedeutetes Filterelement 1, umfassend ein Stützgitter 11 nach einem der vorhergehenden Ansprüche und ein das Stützgitter ringförmig umschließendes Filtermedium 23 oder 24. Aus Fig. 1 werden zwei mögliche Ausführungsformen des Filterelements 1 ersichtlich: In der im oberen Bereich der Figur 1 angedeuteten Variante ist ein sternförmig gefalteter, ringförmig geschlossener Filterbalg 240 aus einem Filtermedium 24 vorgesehen. Dieser ist beispielsweise aus Zellulose, Faservlies oder einer Kombination von Lagen aus verschiedenen Medien gebildet. Wie im Bereich der geschlossenen Endscheibe 22 des Stützrohrs angedeutet, kann die Verbindung von Filterbalg 240 und Stützgitter 11 mittels einer Vergussmasse, beispielsweise Polyurethan erfolgen, die eine Filterelementendscheibe 25 bildet und das Stützgitter 11 und den Filterbalg 240 dichtend verbindet. Am anderen Ende kann die Anbindung und axiale Abdichtung auf gleiche Weise erfolgen oder auf andere, dem Fachmann bekannten Arten. Die im unteren Bereich der Figur 1 gezeigte Variante zeigt eine mögliche Ausführung eines insbesondere als Sekundärfilterelement ausgebildeten Filterelements 1, welches eine flache Filtermedienlage 23 umfasst, die an dem Stützgitter 11 radial außen anliegt und dessen Durchtrittsöffnungen vollständig überdeckt. Die Filtermedienlage kann beispielsweise aus Zellulose, Faservlies oder einer Kombination von Lagen aus verschiedenen Medien gebildet sein. Sie ist an beiden axialen Enden mit dem Stützgitter 11 dichtend verbunden, beispielsweise mittels ringförmig umlaufenden Schweißnähten, Klebespuren oder ringförmigen Spannklammern.

## Patentansprüche

1. Filterelement, umfassend ein einen Innenraum umschließendes Stützgitter (11) und ein das Stützgitter ringförmig umschließendes Filtermedium, (23, 24) das mit dem Stützgitter dichtend verbunden ist, das Stützgitter umfassend eine Mehrzahl von insbesondere geraden Stegen (12), die teilweise untereinander verbunden sind und eine hohlzylindrische, einen zylindrischen Innenraum umgebende Gitterstruktur bilden, wobei jeweils durch mindestens drei miteinander verbundene Stege oder Stegabschnitte Durchtrittsöffnungen (13) gebildet werden, durch welche Fluid radial in Bezug auf eine Mittelachse (14) der hohlzylindrischen Gitterstruktur strömen kann, wobei der mittlere Öffnungsquerschnitt der Durchtrittsöffnungen in einem dem ersten axialen Ende des Stützgitters benachbarten Bereich (15) größer ist als in einem dem zweiten axialen Ende des Stützgitters benachbarten Bereich (16), wobei ein Teil der Stege schräg verläuft, **dadurch gekennzeichnet, dass** eine Vielzahl von Stegen eine den zylindrischen Innenraum umgebende Schraubenform bildet, deren Steigung vom ersten axialen Ende zum zweiten axialen Ende kontinuierlich oder diskontinuierlich abnimmt.

2. Filterelement nach Anspruch 1, am zweiten axialen Ende aufweisend Befestigungsmittel, beispielsweise ein Gewinde, zur insbesondere formschlüssigen Befestigung in einem Filtergehäuse.

3. Filterelement nach Anspruch 1 oder 2, wobei zumindest ein Teil der Stege derart miteinander verbunden sind, dass sie Dreiecke bilden oder dreieckige Durchtrittsöffnungen umschließen.

4. Filterelement nach einem der vorherigen Ansprüche, wobei zumindest ein Teil der Stege derart miteinander verbunden ist, dass sie Rautenformen oder rautenförmige Durchtrittsöffnungen mit mindestens einer nichtrechtwinkligen Ecke bilden.

5. Filterelement nach einem der vorhergehenden Ansprüche, wobei ein Teil der Stege im Wesentlichen parallel zur Mittelachse entlang einer Mehrzahl von angrenzenden Durchtrittsöffnungen verläuft.

6. Filterelement nach einem der vorhergehenden Ansprüche, wobei ein Teil der Stege, die schräg verlaufen, jeweils entlang einer oder mehrerer Referenzebenen schräg verlaufen, wobei die Ebenen nicht parallel und nicht senkrecht zur Mittelachse angeordnet sind.

7. Filterelement nach Anspruch 6, wobei schräg verlaufenden Stege im Bereich des ersten axialen Endes gegenüber einer Normalebene zur Mittelachse eine Neigung aufweisen, die größer ist als die Neigung im Bereich des zweiten axialen Endes.

8. Filterelement nach Anspruch 7, wobei sich die Neigung stufenweise in zwei oder bevorzugt drei oder mehr Stufen vom ersten axialen Ende zum zweiten axialen Ende verändert.

9. Filterelement nach einem der vorhergehenden Ansprüche, wobei mindestens zwei schraubenförmige Linien gebildet sind, die gegenläufige Steigungen aufweisen und sich an mindestens einer Stelle schneiden.

10. Filterelement nach Anspruch 9, wobei eine Mehrzahl von sich jeweils schneidenden, gegenläufigen schraubenförmige Linien vorgesehen sind, die eine Vielzahl von parallel zur Mittelachse verlaufende Stege schneiden, derart, dass eine Vielzahl von Dreiecken gebildet wird, deren mittlerer Öffnungsquerschnitt vom ersten axialen Ende zum zweiten axialen Ende kontinuierlich oder diskontinuierlich abnimmt.

11. Filterelement nach einem der vorhergehenden Ansprüche, wobei mindestens zwei Stege in nicht parallelen Referenzebenen vorgesehen sind, die sich im Bereich des Stützrohrs miteinander und mit parallel zur Mittelachse verlaufenden Stegen so schneiden, dass die aufeinander treffenden Stege ein Dreieck einschließen.

12. Filterelement nach einem der vorhergehenden Ansprüche, dass in dem dem zweiten axialen Ende des Stützgitters benachbarten Bereich dreieckige Durchtrittsöffnungen durch einen oder mehrere innerhalb der dreieckigen Durchtrittsöffnungen angeordnete Zusatzstege verstärkt sind.

13. Filterelement nach Anspruch 12, wobei die Zusatzstege im Wesentlichen parallel zur Mittelachse oder in einer Ebene senkrecht zur Mittelachse verlaufen.

## Claims

1. Filter element, comprising a support grid (11) enclosing an interior space and a filter medium (23, 24) sealingly connected with the support grid and annularly enclosing the support grid, the support grid comprising a plurality of in particular straight webs (12) which are partially connected to each other and form a hollow-cylindrical grid structure surrounding a cylindrical interior space, wherein passage openings (13), through which fluid can radially flow in relation to a center axis (14) of the hollow-cylindrical grid structure, are formed by at least three webs or web sections connected to each other, wherein the central opening cross section of the passage openings is larger in an area (15) adjacent to the first axial end of the support grid than in an area (16) adjacent to the second axial end of the support grid, wherein one portion of the webs is inclined, **characterized in that** a plurality of webs form a helical shape surrounding the cylindrical interior space the screw thread of which decreases continuously or discontinuously from the first axial end towards the second axial end.

2. Filter element according to claim 1, featuring attachment means at the second axial end, for example a thread, for in particular positive-fit attachment in a filter housing.

3. Filter element according to claim 1 or 2, wherein at least one part of the webs are connected with each other in such a way that they form triangles or enclose triangular passage openings.

4. Filter element according to one of the above claims, wherein at least one part of the webs are connected with each other in such a way that they form diamond shapes or diamond-shaped passage openings with at least one non-rectangular corner.

5. Filter element according to one of the above claims, wherein one part of the webs extends substantially parallel to the center axis along a plurality of adjacent passage openings.

6. Filter element according to one of the above claims, wherein one part of the webs, which extend obliquely, extend obliquely each along one or several reference planes, wherein the planes are not parallel and not perpendicular to the center axis.

7. Filter element according to claim 6, wherein obliquely extending webs feature in the area of the first axial end with regard to a normal plane an inclination towards the center axis an inclination which is larger than the inclination in the area of the second axial end.

8. Filter element according to claim 7, wherein the inclination changes gradually in two or preferably in more steps from the first axial end towards the second axial end.

9. Filter element according to one of the above claims, wherein at least two screw-shaped lines are formed which feature screw threads in opposite directions and intersect at least at one location.

10. Filter element according to claim 9, wherein a plurality of respective intersecting, opposite screw-shaped lines are provided which intersect a plurality of webs extending parallel to the center axis in such a way that a plurality of triangles are formed with their mean opening cross section decreasing continuously or discontinuously from the first axial end towards the second axial end.

11. Filter element according to one of the above claims, wherein at least two webs in non-parallel reference planes are provided which intersect in the area of the support tube with one another and with webs extending parallel to the center axis in such a way that the contacting webs enclose a triangle.

12. Filter element according to one of the above claims, that in the area adjacent to the second axial end of the support grid triangular passage openings are reinforced by one or more additional webs disposed within the triangular passage openings.

13. Filter element according to claim 12, wherein the additional webs extend substantially parallel to the center axis or in a plane perpendicular to the center axis.

## Revendications

1. Élément filtrant, comprenant une grille de support (11) entourant l'espace intérieur et un milieu filtrant (23, 24) entourant la grille de support de manière annulaire, lequel est relié de manière étanche à la grille de support, la grille de support comprenant plusieurs nervures (12) essentiellement droites qui sont en partie reliées les unes aux autres et qui forment une structure réticulaire cylindrique creuse entourant un espace intérieur cylindrique, des ouvertures de passage (13) étant formées par respectivement au moins trois nervures ou sections de nervures reliées les unes aux autres et pouvant être parcourues par un fluide en sens radial par rapport à un axe médian (14) de la structure réticulaire cylindrique creuse, la section d'ouverture médiane des ouvertures de passage étant, dans une zone (15) proche de la première extrémité axiale de la grille de support, supérieure que dans une zone (16), proche de la deuxième extrémité axiale de la grille de support, une partie des nervures évoluant en travers, **caractérisé en ce que** plusieurs nervures sont disposées en forme d'hélice autour de l'espace intérieur cylindrique, cette hélice présentant un pas de vis qui diminue de façon continue ou discontinue de la première extrémité axiale à la deuxième extrémité axiale.

2. Élément filtrant selon la revendication 1, étant pourvu, à la deuxième extrémité axiale d'éléments de fixation, par exemple d'un filetage, destinés en particulier à la fixation crabotée dans un boîtier de filtre.

3. Élément filtrant selon la revendication 1 ou 2, au moins certaines nervures étant reliées les unes aux autres de manière à former des triangles ou à entourer des ouvertures de passage triangulaires.

4. Élément filtrant selon l'une des revendications précédentes, au moins certaines nervures étant reliées les unes aux autres de manière à former des losanges ou à former des ouvertures de passage en losange avec au moins un angle non rectangulaire.

5. Élément filtrant selon l'une des revendications précédentes, certaines nervures évoluant essentiellement de manière parallèle à l'axe médian le long de plusieurs ouvertures de passage voisines.

6. Élément filtrant selon l'une des revendications précédentes, certaines nervures disposées en travers évoluant en travers le long d'un ou de plusieurs plans de référence, les plans n'étant ni parallèles ni verticaux à l'axe médian.

7. Élément filtrant selon la revendication 6, des nervures disposées en travers présentant, par rapport à un plan normal, une inclinaison vers l'axe médian à proximité de la première extrémité axiale qui est supérieure à l'inclinaison à proximité de la deuxième extrémité axiale.

8. Élément filtrant selon la revendication 7, l'inclinaison changeant graduellement, en deux ou, de préférence en trois paliers ou plus, entre la première extrémité axiale et la deuxième extrémité axiale.

9. Élément filtrant selon l'une des revendications précédentes, au moins deux lignes hélicoïdales avec des pas de vis contraires et se coupant en au moins un point étant formées.

10. Élément filtrant selon la revendication 9, plusieurs lignes hélicoïdales contraires et se coupant étant prévues, lesquelles coupent plusieurs nervures évoluant de façon parallèle à l'axe médian de sorte à former plusieurs triangles dont la section d'ouverture moyenne diminue de manière continue ou discontinue entre la première extrémité axiale et la deuxième extrémité axiale.

11. Élément filtrant selon l'une des revendications précédentes, au moins deux nervures étant prévues à des plans de référence non parallèles, ces nervures se coupant entre elles à proximité du tube de soutien et avec des nervures évoluant parallèlement à l'axe médian de manière à ce que les nervures qui se touchent forment un triangle.

12. Élément filtrant selon l'une des revendications précédentes, que, dans la zone voisine à la deuxième extrémité axiale de la grille de support, des ouvertures de passage triangulaires sont renforcées par une ou plusieurs nervures supplémentaires disposées à l'intérieur des ouvertures de passage triangulaires.

13. Élément filtrant selon la revendication 12, les nervures supplémentaires évoluant essentiellement parallèlement à l'axe médian ou, sur un plan, verticalement à l'axe médian.
